(19) Europäisches Patentamt

European Patent Office

Office européen des brevets

(11) **EP 2 998 720 A2**

(12) **EUROPEAN PATENT APPLICATION**

(43) Date of publication:
**23.03.2016 Bulletin 2016/12**

(51) Int Cl.:
**G01M 15/14** *(2006.01)*    **G01L 3/04** *(2006.01)*

(21) Application number: **15172547.0**

(22) Date of filing: **17.06.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **14.07.2014 GB 201412473**

(71) Applicant: **Rolls-Royce plc**
**London SW1E 6AT (GB)**

(72) Inventors:
• **Erlund, Mark**
**Derby, Derbyshire DE24 8BJ (GB)**
• **Rowe, Arthur**
**Derby, Derbyshire DE24 8BJ (GB)**

(74) Representative: **Rolls-Royce plc**
**Intellectual Property Dept SinA-48**
**PO Box 31**
**Derby DE24 8BJ (GB)**

(54) **SHAFT STIFFNESS**

(57) A method to determine shaft stiffness (k) of a rotating shaft (30, 32, 34), the shaft coupling a turbine (26, 24, 22) to drive the rotation and a load (14, 16, 18) to be driven by the rotation. For a given operational temperature and rotational speed ($\omega$) of the shaft, the method comprising steps to determine polar moments of inertia of the load ($J_1$) and the turbine ($J_2$). Determine natural torsional vibration frequency ($f_{TV}$) of the shaft (30, 32, 34). Determine the shaft stiffness (k) by calculation using the inertias ($J_1$, $J_2$) and vibration frequency ($f_{TV}$).

Fig.7

## Description

The present invention relates to determining the shaft stiffness of a rotating shaft. It finds particular utility for determining shaft stiffness of a rotating shaft in a gas turbine engine.

EP 2 006 651 discloses a method of determining shaft stiffness for use in calculation of shaft torque of a gas turbine engine shaft. It requires initial calibration of shaft stiffness on a test rig. The method then requires measurement of the natural torsional vibration frequency of the shaft at low engine power, so that the engine is reasonably cool which is intended to be similar conditions to the test rig calibration of shaft stiffness. The shaft stiffness is then extrapolated from the calibration case for other shaft temperatures.

One disadvantage of this method is that the required initial calibration of shaft stiffness requires significant accuracy and is therefore expensive. Another disadvantage of this method is that it can be difficult to measure the natural torsional vibration frequency at low engine power because torsional vibration damping is too large.

The present invention provides a method of determining shaft stiffness of a rotating shaft that seeks to address the aforementioned problems.

Accordingly the present invention provides a method to determine shaft stiffness of a rotating shaft, the shaft coupling a turbine to drive the rotation and a load to be driven by the rotation; for a given operational temperature and rotational speed of the shaft; the method comprising steps to:

> determine polar moment of inertia of the load;
> determine polar moment of inertia of the turbine;
> determine natural torsional vibration frequency of the shaft; and
> determine the shaft stiffness by squaring the product of $2\pi$ and the natural torsional vibration frequency of the shaft and dividing the result by the sum of the inverse inertias.

Advantageously the method is more accurate than known methods and requires no calibration of the shaft stiffness.

The load may be a fan, a compressor or a propeller.

The method may comprise a step to model inertia in terms of operating temperature and rotational speed of the shaft. Advantageously using the inertia modelled in this manner is more accurate than using a fixed value for the inertias. The steps to determine the inertias may comprise looking up the load inertia and the turbine inertia in the model. Advantageously this minimises the computation during use of the method.

The method may comprise further steps to:

> measure axial distribution of the load and turbine;
> apply an axial factor to the load inertia and to the turbine inertia to accommodate axial distribution of inertia along the shaft; and
> express the shaft stiffness as an axial distribution along the shaft.

Advantageously these steps make the method applicable where the shaft system is not an ideal torsional resonator.

The step of determining the natural torsional vibration frequency of the shaft may comprise steps to:

> measure rotational speed of the shaft;
> perform a fast Fourier transform on the rotational speed to obtain its frequency response; and
> determine peak frequency. The peak frequency is the natural torsional vibration frequency.

Advantageously rotational speed is measured at only a single location on the shaft.

Alternatively the step of determining the natural torsional vibration frequency of the shaft may comprise steps to:

> provide a phonic wheel at each end of the shaft;
> measure time of arrival of teeth at each phonic wheel;
> cross-correlate the time of arrival measurements from the phonic wheels;
> plot the cross-correlation against time; and
> fit a quadratic to the cross-correlation plot and find its peak. The peak is the natural torsional vibration frequency.

Advantageously these steps are computationally accurate and quick.

The present invention also provides a controller comprising the method described. Advantageously the controller may be arranged to control the system in which the shaft is installed.

The present invention also provides a gas turbine engine comprising the method described. The present invention also provides a gas turbine engine comprising the controller described. The shaft may be a low pressure shaft that couples a low pressure turbine to a fan. The shaft may be an intermediate pressure shaft that couples an intermediate pressure turbine to an intermediate pressure compressor. The shaft may be a high pressure shaft that couples a high pressure turbine to a high pressure compressor.

The present invention also provides a method of determining shaft torque comprising steps to:

> determine shaft stiffness according to the method described;
> measure shaft twist angle; and
> multiply together the shaft stiffness and shaft twist angle to give shaft torque.

Advantageously the determination of shaft torque is more accurate than known methods because the shaft stiffness is more accurate.

The present invention also provides a method of determining fan deterioration in a gas turbine engine, the gas turbine engine comprising a shaft coupling a turbine to drive rotation and a fan to be driven by the rotation of the shaft; the method comprising steps to:

a) measure pressure in a bypass duct of the gas turbine engine;
b) measure fan pressure ratio;
c) calculate ideal power of the fan by multiplying power required to produce the fan pressure ratio and mass flow through the gas turbine engine;
d) determine shaft torque as described;
e) calculate actual shaft power produced by the fan by multiplying the shaft torque by the rotational speed of the shaft;
f) repeating steps a) to e) over time; and
g) determining fan deterioration as ratio of ideal fan power to actual shaft power over time.

Advantageously the method provides an accurate indication of fan deterioration. Advantageously fan deterioration can be monitored over time by tracking the change in the ratio from step g).

The present invention also provides a method of controlling a gas turbine engine comprising steps to:

determine shaft torque as described;
determine actual shaft power by multiplying together shaft torque and rotational speed of the shaft;
compare actual shaft power to demanded engine power to give a comparison value; and
change fuel flow to the gas turbine engine if the comparison value is non-zero.

Advantageously this method provides more accurate gas turbine engine control than known methods.

The step of changing fuel flow may comprise increasing fuel flow if the comparison value is less than zero. The step of changing fuel flow may comprise decreasing fuel flow if the comparison value is greater than zero. Alternatively the step of changing fuel flow may comprise increasing fuel flow if the comparison value is greater than zero and/or decreasing fuel flow if the comparison value is less than zero.

The present invention also provides a computer readable medium, having a computer program recorded thereon, wherein the computer program is adapted to make the computer execute the method as described; a computer program having instructions adapted to carry out the method as described; and a computer program comprising the computer readable medium as described.

Any combination of the optional features is encompassed within the scope of the invention except where mutually exclusive.

The present invention will be more fully described by way of example with reference to the accompanying drawings, in which:

Figure 1 is a sectional side view of a gas turbine engine.
Figure 2 is a schematic perspective view of a shaft system.
Figure 3 is a graph of timing responses of the shaft system in Figure 2.
Figure 4 is a schematic perspective view of a shaft system.
Figure 5 is a graph of timing responses of the shaft system in Figure 4.
Figure 6 is a graph of amplitude plotted against frequency.
Figure 7 is a flow chart of method steps.

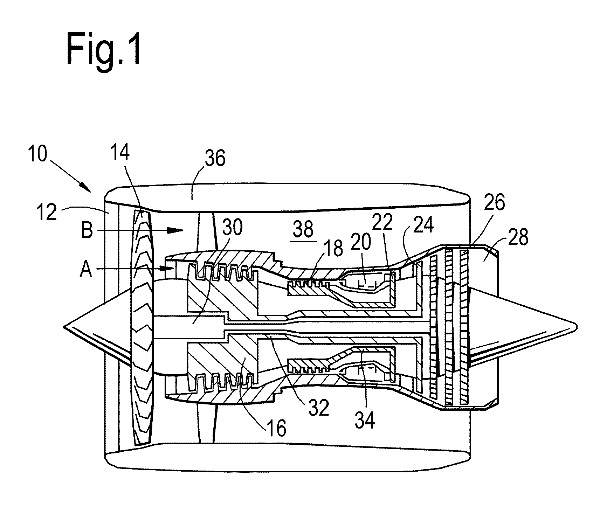

A gas turbine engine 10 is shown in Figure 1 and comprises an air intake 12 and a propulsive fan 14 that generates two airflows A and B. The gas turbine engine 10 comprises, in axial flow A, an intermediate pressure compressor 16, a high pressure compressor 18, a combustor 20, a high pressure turbine 22, an intermediate pressure turbine 24, a low pressure turbine 26 and an exhaust nozzle 28. A low pressure shaft 30 couples the low pressure turbine 26 to the fan 14. An intermediate pressure shaft 32 couples the intermediate pressure turbine 24 to the intermediate pressure compressor 16. A high pressure shaft 34 couples the high pressure turbine 22 to the high pressure compressor 18. A nacelle 36 surrounds the gas turbine engine 10 and defines, in axial flow B, a bypass duct 38.

In use, air is drawn into the air intake 12 and is accelerated by the fan 14. It is split into the two axial flows A, B. In a high bypass ratio gas turbine engine 10, the majority of the air is passed through the bypass duct 38 to be expelled to give propulsive thrust. The remainder of the air is passed into the core engine (axial flow A) where it is compressed and accelerated by the intermediate pressure compressor 16 and then the high pressure compressor 18. Fuel is injected into the combustor 20 and combusted with the air from the high pressure compressor 18. Hot combustion gases are expelled from the combustor 20. The gases are expanded and slowed through the high pressure turbine 22, intermediate pressure turbine 24 and finally through the low pressure turbine 26 before being expelled through the exhaust nozzle 28 to provide a small amount of the propulsive thrust.

Thus the flow of hot combustion gases through the turbines 22, 24, 26 causes them to rotate. The shafts 30, 32, 34 that couple the turbines 22, 24, 26 to the compressors 16, 18 and fan 14 drive their rotation. Thus the low pressure turbine 26 drives the fan 14, the intermediate pressure turbine 24 drives the intermediate pressure compressor 16 and the high pressure turbine 22 drives the high pressure compressor 18.

The method of the present invention will be described with respect to the low pressure shaft 30. However, it may also be applied with felicity to the intermediate pressure shaft 32 or to the high pressure shaft 34. The same explanation applies, mutatis mutandis, except where specifically indicated herein.

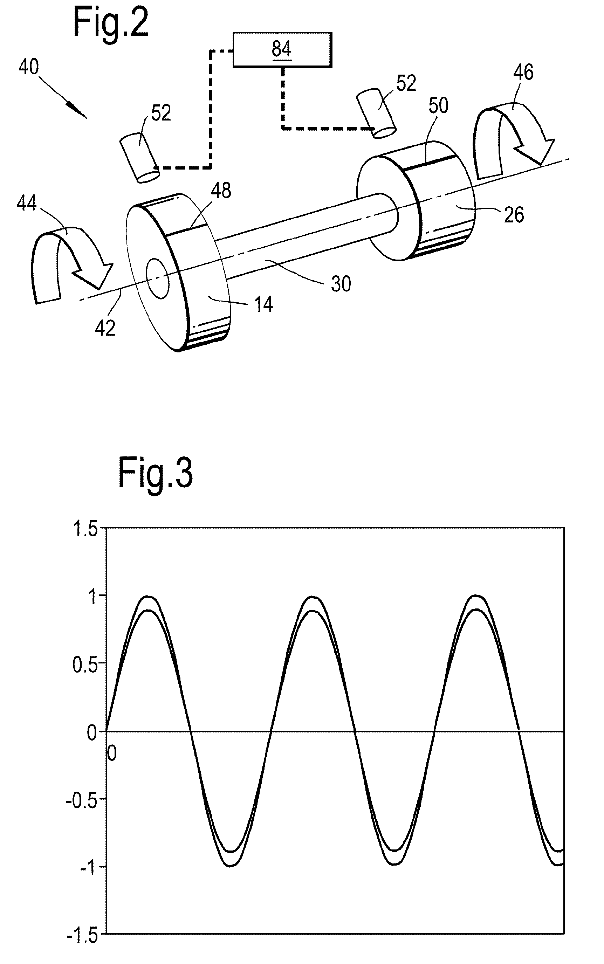

A shaft system 40 is shown in Figure 2. The shaft system 40 comprises, for example, the low pressure shaft 30, fan 14 and low pressure turbine 26. The shaft system 40 is symmetrical about its rotational axis 42 and rotates in the direction shown by the arrows 44, 46. The low pressure shaft 30 rotates at rotational speed $\omega$. An annular array of timing features 48, 50 is provided on each of the fan 14 and low pressure turbine 26. A single exemplary timing feature 48, 50 is shown on each of the fan 14 and low pressure turbine 26. As illustrated the features 48, 50 are circumferentially aligned. However, the features 48, 50 may alternatively be circumferentially offset. The time of arrival of each of the timing features 48, 50 is measured by time of arrival probes 52 aligned with the fan 14 and the low pressure turbine 26 respectively.

Figure 3 shows a graph of the time of arrival measurements made by the probes 52 against time. The period of the sinusoidal plot of the measurements from the fan 14 is the same as the period of the sinusoidal plot of the measurements from the low pressure turbine 26 because the number of features 48 on the fan 14 is the same as the number of features 50 on the low pressure turbine 26. As illustrated the sinusoids are coincident; alternatively they may be offset by a constant phase angle due to the circumferential offset between the feature 48 and the feature 50. The amplitudes of the two sinusoids may differ due to the spacing of the teeth from the sensors.

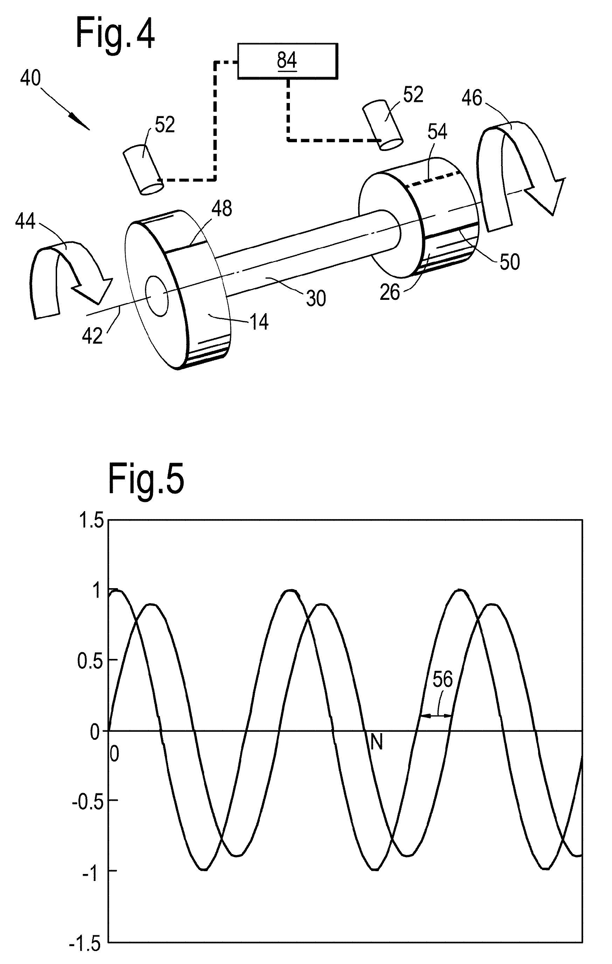

Figure 4 is similar to Figure 2 except that the circumferential angle between the timing feature 50 on the low pressure turbine 26 and the timing feature 48 on the fan 14 is different. The previous circumferential position of the timing feature 50 on the low pressure turbine 26 is shown by line 54. The shaft twist angle $\theta$ is the angle subtended by the radial projections of the aligned position 54 and the timing feature 50.

Figure 5 is similar to Figure 3 except that it plots the measurements where the timing features 48, 50 are circumferentially offset as shown in Figure 4. Consequently there is a greater phase difference 56 between the measurements from the timing feature 48 on the fan 14 and the timing feature 50 on the low pressure turbine 26 than in Figure 3. This phase difference 56 is proportional to the shaft twist angle $\theta$. The shaft twist angle $\theta$ can therefore be derived from the phase difference 56.

Although the low pressure shaft 30 is designed to be stiff in order to resist twisting, it has some compliance. The compliance is a function of the material from which the low pressure shaft 30 is formed, the design of the low pressure shaft 30, and the operational temperature of the shaft system 40. Thus the low pressure shaft 30 has shaft stiffness k.

Polar moment of inertia is a measure of how difficult it is to accelerate a body for a given applied torque. The polar moment of inertia J can be described as $J = \sum mr^2$, where m is mass and r is the radius from the axis of rotation at which that mass acts. The fan 14 has a polar moment of inertia $J_1$ that can be measured at static, cool conditions. Similarly, the low pressure turbine 26 has a polar moment of inertia $J_2$ that can be measured at static, cool conditions. The inertia $J_1$ of the fan 14 and the inertia $J_2$ of the low pressure turbine 26 are each altered by operating temperature and rotational speed $\omega$. Thus it is beneficial to model the dependence of the inertias $J_1$, $J_2$ on operating temperature and rotational speed $\omega$. The relationship may be expressed mathematically, graphically or in tabular form. The inertia $J_1$ of the fan 14 and the inertia $J_2$ of the low pressure turbine 26 at any given operating conditions may then be determined by looking up a graph or table, or by calculating from the modelled mathematical relationship, once the operating temperature and rotational speed $\omega$ of interest are known.

The overall shaft twist, as described with respect to Figure 4, comprises two components. The underlying shaft twist angle $\theta$ is the angle subtended by the radial projections of the aligned position 54 and the timing feature 50. This is also derivable from the phase difference 56 shown in Figure 5. However, the shaft also experiences torsional vibration which means that any given time of arrival measurement of the timing feature 50 at the time of arrival probe 52 may be slightly advanced or retarded relative to the expected time of arrival when the phase difference 56 is taken into account. This torsional vibration is cyclic at the natural torsional vibration frequency $f_{TV}$ of the low pressure shaft 30. It can be considered as the oscillation frequency about the shaft twist angle $\theta$.

The frequency of oscillation is dependent on the inertial moments $J_1$, $J_2$ applied to the low pressure shaft 30 by the fan 14 and low pressure turbine 26, and the rotational speed $\omega$ of the low pressure shaft 30.

It is necessary to determine the natural torsional vibration frequency $f_{TV}$ of the low pressure shaft 30 in real time, that is during engine running at the time at which it is desired to use it in a calculation. This is because the torsional vibration is dependent on operational temperature of the shaft system 40, since temperature changes cause thermal growth of the components and the shaft stiffness k and thus change the inertias $J_1$, $J_2$, and the rotational speed $\omega$ of the low pressure shaft 30, since increased rotational speed $\omega$ causes centrifugal growth of components. Advantageously the shaft twist angle $\theta$ is already measured for the purposes of determining the natural torsional vibration frequency $f_{TV}$ for the low pressure shaft 30 of a gas turbine engine 10.

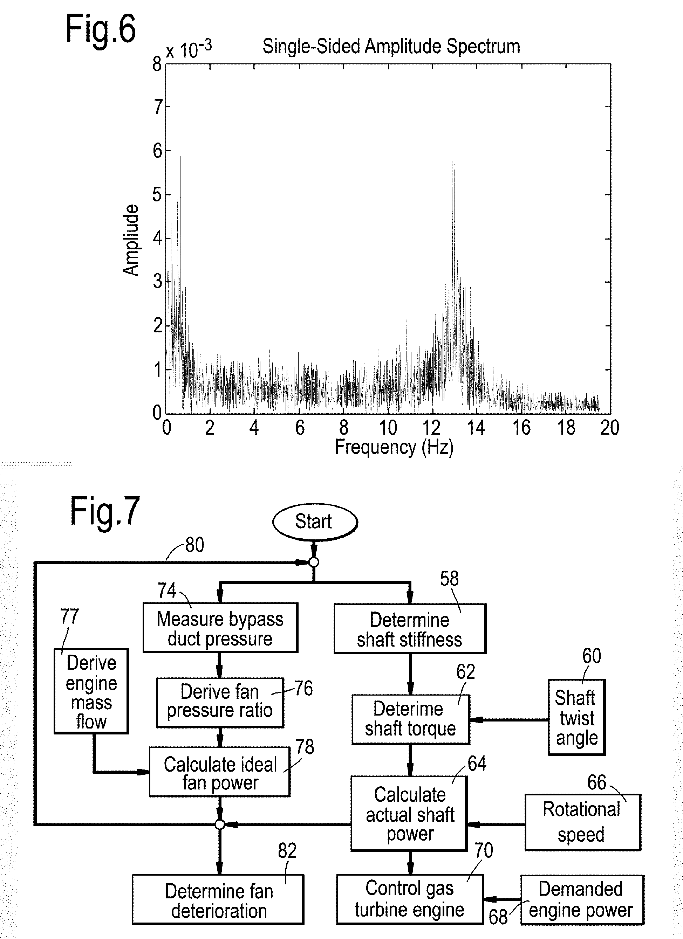

A first method of determining the natural torsional vibration frequency $f_{TV}$ comprises three steps. In the first step the rotational speed $\omega$ of the low pressure shaft 30 is measured, for example using a known speed probe or phonic wheel mounted anywhere along the low pressure shaft 30. As will be apparent to the skilled reader, it is beneficial to position the speed probes or phonic wheels away from points on the low pressure shaft 30 that are nodes of oscillation, that is where the amplitude of oscillation is approximately zero. In a second step a fast Fourier transform is applied to the measured rotational speed $\omega$ in order to generate a spectrum of the frequency response. An example of such a frequency response is shown in Figure 6. The peak frequency, at around 13Hz as drawn, corresponds to natural torsional vibration frequency $f_{TV}$. The spread of the peak is due to the damping of the natural torsional vibration frequency $f_{TV}$. Thus more damping results in a broader, lower peak. Advantageously the spread of the frequency peak may be used as a quality measure so that if the peak is too spread it is determined that there is too much damping to give an accurate indication of the natural torsional vibration frequency $f_{TV}$.

The natural torsional vibration frequency $f_{TV}$ may be in the range of 10Hz to 100Hz. For a three-shaft gas turbine engine 10, the intermediate pressure shaft 32 may have a natural torsional vibration frequency $f_{TV}$ in the range 30Hz to 60Hz. The low pressure shaft 30 may have a natural torsional vibration frequency $f_{TV}$ with a lower frequency, for example less than 30Hz, because it is longer and inherently less stiff. The high pressure shaft 34 may have a natural torsional vibration frequency $f_{TV}$ with a higher frequency, for example greater than 60Hz because it is short and stiff.

A second method of determining the natural torsional vibration frequency $f_{TV}$ comprises a first step of providing a phonic wheel at each end of the low pressure shaft 30 and a second step of measuring the time of arrival of each tooth of each phonic wheel. A third step of the method comprises cross-correlating the time of arrival measurements from the fan 14 end of the low pressure shaft 30 with the time of arrival measurements from the low pressure turbine 26 end of the low pressure shaft 30. The cross-correlation should be repeated with different imposed time delays between the two sets of measurements. In a fourth step of the method the cross-correlations should be plotted against the time delay imposed. In a fifth step of the method a quadratic is fitted to the plot against time and its peak is found. The peak of a quadratic is where the gradient is zero. The peak corresponds to the natural torsional vibration frequency $f_{TV}$.

Thus the natural torsional vibration frequency $f_{TV}$ can be determined or derived, using either of the described methods, from measurements of the rotational speed $\omega$ of the low pressure shaft 30 at one or two locations along its length.

For an ideal torsional resonator shaft stiffness k is proportional to the square of the natural torsional vibration frequency $f_{TV}$ and is inversely proportional to the sum of the inverse inertias. The low pressure shaft 30 is sufficiently similar to an ideal torsional resonator.

Therefore, more precisely, $k = \dfrac{\left(2\pi f_{TV}\right)^2}{1/J_1 + 1/J_2}$ for any running condition of the gas turbine engine 10 in which the low pressure shaft 30 operates. Thus the shaft stiffness k at any running condition of the low pressure shaft 30 may be determined if the polar moment of inertia $J_1$ of the fan 14, the polar moment of inertia $J_2$ of the low pressure turbine 26 and the natural torsional vibration frequency $f_{TV}$ of the low pressure shaft 30 are known. Advantageously the method of the present invention requires no calibration of the shaft stiffness k, which means it is cheaper than the method described in EP 2 006 651.

The method to determine shaft stiffness k according to the present invention thus comprises ordered steps. The steps are described in relation to the low pressure shaft 30 which couples the low pressure turbine 26 to drive the load, fan 14. The steps are performed for a given operational temperature and rotational speed $\omega$ of the low pressure shaft 30. In a first step, the polar moment of inertia $J_1$ of the fan 14 is determined. In a second step, the polar moment of inertia $J_2$ of the low pressure turbine 26 is determined. The first and second steps may be performed in reverse order; that is the second step may be performed before the first step.

In a third step the natural torsional vibration frequency $f_{TV}$ of the low pressure shaft 30 is determined. Alternatively the third step may be performed before the first step or between the first and second steps. Alternatively, where the first and second steps are reversed, the third step may be performed before the second step or between the second and first steps.

In a final step of the method the shaft stiffness k is determined from the following sub-steps which can be performed in any order. Multiply the natural torsional vibration frequency $f_{TV}$ by $2\pi$ and square the result to give $(2\pi f_{TV})^2$. Take the inverse of each inertia $J_1$, $J_2$; that is, one divided by each inertia $J_1$, $J_2$. Sum the inverse inertias to give $1/J_1 + 1/J_2$. Once all these sub-steps have been performed, the shaft stiffness k is determined by dividing the squared product by the summed inverse inertias thus: $k = \dfrac{\left(2\pi f_{TV}\right)^2}{1/J_1 + 1/J_2}$.

The method of determining shaft stiffness k may be used in several applications as will be described. In particular the method of determining shaft stiffness k can be used in a method to determine shaft torque $\tau$ which has application in a range of further methods.

The method of determining shaft torque $\tau$ is described with respect to the flow chart in Figure 7. From the start point the method follows the right-hand branch of the flow chart. In box 58 the shaft stiffness k is determined in accordance with the method described above.

In box 60 the shaft twist angle θ is provided. This is measured and/or derived as described above. Finally in box 62 the shaft torque τ is determined by multiplying together the shaft stiffness k and the shaft twist angle θ.

Where the shaft stiffness k determined in accordance with the method of the present invention is used to calculate the shaft torque τ, there is no requirement for shaft torque measurement probes or telemetry to transmit the measurements to a controller. Advantageously this reduces the part count and weight of the gas turbine engine 10 without compromising accuracy of the measurements.

A method of calculating the actual shaft power, that is the power generated by the low pressure shaft 30, uses the shaft torque τ as determined above. Specifically the actual shaft power is calculated at box 64. A further input to box 64 is the rotational speed ω as shown at box 66. The actual shaft power is calculated at box 64 by multiplying together the shaft torque τ determined at box 62 and the rotational speed ω. The actual shaft power can be used for two purposes.

A method of controlling a gas turbine engine 10 that comprises the shaft system 40 uses the actual shaft power calculated at box 64. The method of controlling the gas turbine engine 10 comprises determining or receiving the demanded engine power at box 68. At box 70 a comparison is made between the engine thrust that can be supplied, given the actual shaft power available, and the demanded engine thrust. For example, a comparison value 72 may be generated as a result of the comparison. Specifically the comparison value 72 may be generated as the demanded engine thrust minus the available engine thrust given the actual shaft power. If the comparison value 72 is non-zero, and thus the available and demanded engine thrust differ, the fuel flow to the gas turbine engine 10 may be changed to adjust the available engine thrust. Thus if the comparison value 72 is less than zero the fuel flow may be increased to increase the rotational speed ω of the low pressure shaft 30 and therefore the actual shaft power and available engine thrust. Alternatively, if the comparison value 72 is greater than zero the fuel flow may be decreased to decrease the rotational speed ω of the low pressure shaft 30 and therefore the actual shaft power and available engine thrust.

A method of determining deterioration of the fan 14 also uses the actual shaft power calculated at box 64. The method also comprises measuring the air pressure in the bypass duct 38, as shown in box 74. Using the bypass pressure and measured air pressure at the intake 12, the fan pressure ratio can be derived at box 76. At box 77 the mass flow of air through the gas turbine engine 10 is derived by conventional methods. The power required to produce the fan pressure ratio derived at box 76 can be determined for an ideal system in which there are no losses. By multiplying the power required and the mass flow 77 through the gas turbine engine 10, the power of an ideal fan 14 is calculated at box 78. The steps to calculate actual shaft power, boxes 58, 60, 62, 66 and 64, and the steps to calculate ideal fan power, boxes 74, 76, 78, are repeated over time on iteration branch 80.

In box 82 the fan deterioration over time is determined from the ideal fan power (box 78) and the actual shaft power (box 64). Specifically, fan efficiency is the ratio of the ideal fan power to the actual shaft power being produced. Fan deterioration can thus be determined by tracking the change in this ratio over time. The ideal fan power (box 78) will always be smaller than the actual shaft power available (box 64) because the actual shaft system 40 includes losses, hysteresis and other effects that are discounted in the ideal fan power calculation. However, if the amount by which the actual shaft power generated to obtain a given bypass duct pressure is greater than the ideal fan power increases over time, this indicates that the fan 14 has deteriorated over that period to become less efficient.

Advantageously this method of determining fan deterioration can be used to inform maintenance actions. For example, a threshold difference between actual shaft power and ideal fan power can be set as a trigger for inspection of the shaft system 40. Depending on the result of the inspection, the fan 14 or other components of the shaft system 40 may be maintained by being cleaned, repaired or replaced to recover efficiency of the shaft system 40 and the gas turbine engine 10 in which it operates. Alternatively the trigger for inspection and maintenance may be a threshold rate of change of the ratio between ideal power and actual shaft power so that rapid fan deterioration triggers inspection and/or maintenance but slower fan deterioration does not specifically trigger such actions.

The method of determining fan deterioration may be used in a monitoring capacity. That is it does not trigger inspection or maintenance actions but the determinations of fan deterioration from box 82 may be analysed during routine maintenance work or when the gas turbine engine 10 is in an overhaul environment for other reasons. Thus the passively monitored information may inform additional inspection or maintenance activities than would otherwise be performed in such routine work.

Advantageously the methods of the present invention may be used in engine development programmes. For example, the method of determining shaft stiffness k may be used to validate models of the shaft system 40 in order to improve future designs. The method of determining shaft torque τ may be used to predict strain on the low pressure shaft 30 and thus its probable failure modes. These can then be used to predict the life of the shaft system 40 and its components and thus the remaining time to failure, where the low pressure shaft 30 design life is shorter than the engine design life. The method of determining fan deterioration is an example of how component life can be determined and action taken during the development programme to change the factors which cause the fan deterioration to retard that deterioration.

The method of controlling the gas turbine engine 10 using shaft torque $\tau$ offers a particularly effective control parameter where the fan 14 is a variable pitch fan. A variable pitch fan is one where the angle of the rotating fan blades to the incident air flow can be changed.

The method of controlling the gas turbine engine 10 may be used in development programmes as a parallel control method. For example, the method as described herein may be used to control the gas turbine engine 10 but a conventional control method based on shaft speed or a pressure ratio may be available to control the gas turbine engine 10 if unexpected flight scenarios occur. The control method can therefore be directly compared against current control methods in order to identify the improvements in gas turbine engine 10 performance, reduction in exhaust temperatures and other benefits of the described method. Running the described control method in parallel with known control methods also provides the option of switching control method dependent on prevailing conditions, such as flight phase, so that the most efficient method of control is used at any given time.

The methods of the present invention have been described in relation to the low pressure shaft 30, fan 14 and low pressure turbine 26. However, the methods are also applicable to the intermediate pressure shaft 32 and the high pressure shaft 34 and their respective compressors 16, 18 and turbines 22, 24. Both the intermediate pressure shaft system and the high pressure shaft system are less accurately described as ideal torsional resonators than the low pressure shaft system 40. Thus the methods must be adapted to account for the axial spread of the compressor inertia $J_1$ and turbine inertia $J_2$.

Thus the method of determining shaft stiffness k may comprise additional steps described in relation to the intermediate pressure shaft 32, intermediate pressure compressor 16 and intermediate pressure turbine 24. Neither the intermediate pressure compressor 16 nor the intermediate pressure turbine 24 can be accurately modelled as a lumped mass, particularly because both components have multiple rotor stages that are axially spaced. Thus first there is a step to measure the axial extent of the load, intermediate pressure compressor 16, and the axial extent of the intermediate pressure turbine 24. An axial factor can then be applied to the load inertia $J_1$ and the same or a different axial factor applied to the turbine inertia $J_2$. The axial factor or factors take account of the axial distribution of the inertias $J_1$, $J_2$. Finally the modified inertias $J_1$, $J_2$ are used in the method to express the shaft stiffness k as an axial distribution along the intermediate pressure shaft 32 instead of as a single value applicable anywhere along the shaft 32.

The additional steps apply mutatis mutandis to the high pressure shaft 34, high pressure compressor 18 and high pressure turbine 22.

Advantageously the method of determining shaft stiffness k according to the present invention is more accurate than known methods. In particular, because the shaft stiffness k is calculated from current values of the load inertia $J_1$, turbine inertia $J_2$ and natural torsional vibration frequency $f_{TV}$ the hysteresis present in known methods is substantially eliminated in the present method.

The steps of the methods may advantageously be performed by a controller 84 as shown in Figure 2. The controller 84 may be a function of the engine electronic controller (EEC) or may be functionally coupled thereto. This is particularly advantageous where the shaft torque $\tau$ determined according to the method is used to control the gas turbine engine 10 at step 70 of Figure 7. The controller 84 may perform control functions, monitoring functions or a combination of both.

The method of determining shaft stiffness k according to the present invention is preferably encompassed in computer-implemented code and stored on a computer-readable medium. It is thus a computer-implemented method of determining shaft stiffness k. The method may be implemented on a basic computer system comprising a processing unit, memory, user interface means such as a keyboard and/or mouse, and display means. The method may be performed 'offline' on data which has been measured and recorded previously. This has advantages when analysing data for development work of improvements to the shaft system 40 and/or gas turbine engine 10. Alternatively it may be performed in 'real-time', that is at the same time that the data is measured. In this case the computer may be coupled to the shaft system 40 and/or gas turbine engine 10. Where the system forms part of a gas turbine engine 10 the computer may be an electronic engine controller or another on-board processor. Where the gas turbine engine 10 powers an aircraft, the computer may be an engine controller, a processor on-board the engine 10 or a processor on-board the aircraft. Thus the gas turbine engine 10 comprises the controller 84 which implements the method or, more generally, the gas turbine engine 10 comprises the method.

Although the timing feature 48 has been described as provided on the fan 14 it may alternatively be provided on a phonic wheel mounted to the low pressure shaft 30 and located axially close to the fan 14. Similarly, although the timing feature 50 has been described as provided on the low pressure turbine 26 it may alternatively be provided on a phonic wheel mounted to the low pressure shaft 30 and located axially close to the low pressure turbine 26.

The method has been described in relation to a shaft system 40 of a gas turbine engine 10. However, it also finds felicity in shaft systems in other applications, for example drive trains for compressors in oil and gas pumping pipelines and for ship propellers. The method is also applicable where the driven load is an electrical generator.

**Claims**

1. A method to determine shaft stiffness (k) of a rotating shaft (30, 32, 34), the shaft (30, 32, 34) coupling a turbine (26, 24, 22) to drive the rotation and a load (14, 16, 18) to be driven by the rotation; for a given operational temperature and rotational speed ($\omega$) of the shaft (30, 32, 34), the method comprising steps to:

   • determine polar moment of inertia of the load ($J_1$);
   • determine polar moment of inertia of the turbine ($J_2$);
   • determine natural torsional vibration frequency ($f_{TV}$) of the shaft (30, 32, 34); and
   • determine the shaft stiffness (k) by squaring the product of $2\pi$ and the natural torsional vibration frequency ($f_{TV}$) of the shaft (30, 32, 34) and dividing the result by the sum of the inverse inertias ($1/J_1$, $1/J_2$).

2. A method as claimed in claim 1 wherein the load (14, 16, 18) comprises a fan (14), a compressor (16, 18) or a propeller.

3. A method as claimed in claim 1 or claim 2 further comprising a step to model inertia ($J_1$, $J_2$) in terms of operating temperature and rotational speed ($\omega$) of the shaft (30, 32, 34).

4. A method as claimed in claim 3 wherein the steps to determine the inertias comprise looking up the load inertia ($J_1$) and the turbine inertia ($J_2$) in the model.

5. A method as claimed in any preceding claim further comprising steps to:

   • measure axial distribution of the load (14, 16, 18) and turbine (26, 24, 22);
   • apply an axial factor to the load inertia ($J_1$) and to the turbine inertia ($J_2$) to accommodate axial distribution of inertia along the shaft (30, 32, 34); and
   • express the shaft stiffness (k) as an axial distribution along the shaft (30, 32, 34).

6. A method as claimed in any of claims 1 to 5 wherein the step of determining the natural torsional vibration frequency ($f_{TV}$) of the shaft (30, 32, 34) comprises steps to:

   • measure rotational speed ($\omega$) of the shaft (30, 32, 34);
   • perform a fast Fourier transform on the rotational speed ($\omega$) to obtain its frequency response; and
   • determine peak frequency.

7. A method as claimed in any of claims 1 to 5 wherein the step of determining the natural torsional vibration frequency ($f_{TV}$) of the shaft (30, 32, 34) comprises steps to:

   • provide a phonic wheel at each end of the shaft (30, 32, 34);
   • measure time of arrival of teeth of each phonic wheel;
   • cross-correlate the time of arrival measurements from the phonic wheels;
   • plot the cross-correlation against time; and
   • fit a quadratic to the cross-correlation plot and find its peak.

8. A controller (84) comprising the method as claimed in any preceding claim.

9. A gas turbine engine (10) comprising the method as claimed in any of claims 1 to 7 or the controller (84) as claimed in claim 8.

10. A gas turbine engine (10) as claimed in claim 9 wherein the shaft (30, 32, 34) is a low pressure shaft (30), an intermediate pressure shaft (32) or a high pressure shaft (34).

11. A method of determining shaft torque ($\tau$) comprising steps to:

   • determine shaft stiffness (k) according to any of claims 1 to 7;
   • measure shaft twist angle ($\theta$); and
   • multiply together the shaft stiffness (k) and shaft twist angle ($\theta$) to give shaft torque ($\tau$).

12. A method of determining fan deterioration in a gas turbine engine (10), the gas turbine engine (10) comprising a shaft (30, 32, 34) coupling a turbine (26, 24, 22) to drive rotation and a fan (14) to be driven by the rotation of the shaft (30, 32, 34); the method comprising steps to:

   a) measure pressure in bypass duct (38);
   b) measure air pressure at engine intake (12) and derive fan pressure ratio;
   c) calculate ideal power of the fan (14) by multiplying power required to produce the fan pressure ratio and mass flow through the gas turbine engine (10);
   d) determine shaft torque ($\tau$) according to claim 11;
   e) calculate actual shaft power produced by the fan (14) by multiplying the shaft torque ($\tau$) by the rotational speed ($\omega$) of the shaft;
   f) repeating steps a) to e) over time; and
   g) determining fan deterioration as ratio of ideal fan power to actual shaft power over time.

**13.** A method of controlling a gas turbine engine (10) comprising steps to:

> • determine shaft torque ($\tau$) according to claim 11;
> • determine actual shaft power by multiplying together shaft torque ($\tau$) and rotational speed ($\omega$) of the shaft (30, 32, 34);
> • compare actual shaft power to demanded engine power to give a comparison value; and
> • change fuel flow to the gas turbine engine (10) if the comparison value is non-zero.

**14.** A method as claimed in claim 13 further comprising increasing fuel flow if the comparison value is less than zero or decreasing fuel flow if the comparison value is greater than zero.

**15.** A computer program having instructions adapted to carry out the method according to any of claims 1 to 14.

# Fig.1

## Fig.2

## Fig.3

# Fig.4

40

84

52

52

46

54

44

48

50

42

30

26

14

# Fig.5

1.5

1

0.5

0.0

0

N

56

-0.5

-1

-1.5

# Fig.6

Single-Sided Amplitude Spectrum

# Fig.7

**EP 2 998 720 A2**

**REFERENCES CITED IN THE DESCRIPTION**

**Patent documents cited in the description**

- EP 2006651 A